**Europäisches Patentamt**

**European Patent Office**

**Office européen des brevets**

(19)

(11) Veröffentlichungsnummer : **0 197 445**
**B1**

(12) **EUROPÄISCHE PATENTSCHRIFT**

(45) Veröffentlichungstag der Patentschrift :
28.06.89

(51) Int. Cl.⁴ : **H 02 M 1/084**

(21) Anmeldenummer : **86104209.1**

(22) Anmeldetag : **26.03.86**

(54) **Verfahren und Vorrichtung zum Bestimmen der Phasenlage eines mehrphasigen Messwertsystems.**

(30) Priorität : **09.04.85 DE 3512738**

(43) Veröffentlichungstag der Anmeldung :
**15.10.86 Patentblatt 86/42**

(45) Bekanntmachung des Hinweises auf die Patenterteilung : **28.06.89 Patentblatt 89/26**

(84) Benannte Vertragsstaaten :
**CH DE LI SE**

(56) Entgegenhaltungen :
**EP—A— 0 097 958**
**EP—A— 0 106 022**
**EP—A— 0 150 370**

(73) Patentinhaber : **Siemens Aktiengesellschaft Berlin und München**
**Wittelsbacherplatz 2**
**D-8000 München 2 (DE)**

(72) Erfinder : **Hosemann, Gerhard, Prof. Dr. Ing.**
**Weiherackerweg 36**
**D-8525 Rathsberg (DE)**

Jouve, 18, rue St-Denis, 75001 Paris, France

**Beschreibung**

Die Erfindung betrifft ein Verfahren zum Bestimmen der Phasenlage eines Meßwertsystems für Strom, Spannung, Ladung oder Fluß eines mehrphasigen Wechselstromnetzes entsprechend den Merkmalen des Oberbegriffs des Anspruchs 1. Die Erfindung betrifft ferner eine Anwendung des Verfahrens und eine Vorrichtung hierzu.

Die Einschwingvorgänge beim Zuschalten dreiphasiger Betriebsmittel in Drehstromnetzes hängen u. a. von der Phasenlage der Drehstromgrößen ab. Beispielsweise genügt es beim Synchronisieren eines Kraftwerksgenerators keinesfalls, nur die Frequenz und den Betrag der Generatorspannung mit der Netzspannung in Übereinstimmen zu bringen; vielmehr müssen beim richtigen Drehsinn auch die Phasenwinkeldifferenzen zwischen den Spannungen auf der Generatorseite und auf der Netzseite so klein wie möglich sein. Auch bei der Schnellumschaltung von Sammelschienen mit angeschlossenen Motoren, z. B. in den Eigenbedarfsanlagen von Kraftwerken, muß die Phasenwinkeldifferenz beachtet werden.

Noch höhere Anforderungen stellen Stromrichter beispielsweise im Wechselrichterbetrieb einer Leistungsübertragung mit hochgespanntem Gleichstrom (HGÜ): tritt im Drehstromnetz, in das der Wechselrichter einspeist, ein Kurzschluß auf, so muß nach der Beseitigung des Kurzschlusses der Wechselrichter so rasch wie möglich auf die sich wieder aufbauende Drehspannung synchronisiert werden, um die stabile Leistungsübertragung wieder herzustellen; andernfalls sind schwerwiegende Netzstörungen nicht auszuschließen.

Es besteht daher ein besonderes Interesse, die Phasenlage von Drehstromgrößen kontinuierlich und schnell festzustellen.

Die Grundschwingung eines einzelnen Meßwertes aus einem mehrphasigen Meßwertsystem, z. B. einer Sternspannung nach DIN 40108, läßt sich durch eine Sinusfunktion oder eine Cosinusfunktion mit der Amplitude â darstellen, wobei der Phasenwinkel nach DIN 1311 T 1, Abs. 1.5 als Argument der auf die Amplitude â normierten Sinus- oder Cosinus-Funktion definiert und mit $\varphi$ bezeichnet ist. Gemäß dieser Definition läßt er sich aus einer einphasigen Größe a(t) gemäß $\varphi = \arcsin(a/\hat{a})$ nur im eingeschwungenen, oberschwingungsfreien Zustand genau feststellen.

Bei Stromrichtern, die sich praktisch in immerwährenden Einschwingvorgängen befinden und starke Oberschwingungen erzeugen, behilft man sich deshalb mit Zeitdifferenzmessungen, indem man vorzugsweise die seit dem letzten Nulldurchgang verflossene Zeit $\Delta t$ feststellt. Für den Phasenwinkel gilt dann $\varphi = \varphi_o + \omega_N \cdot \Delta t$; dabei sind $\omega_N = 2\pi f$ die Netzfrequenz unf $\varphi_o$ eine Konstante.

Davon ausgehende Verfahren arbeiten diskontinuierlich, da entweder für den Momentanwert des Quotienten $a/\hat{a}$ die letzte Amplitude â oder zur Bestimmung von $\gamma_o + \omega_N \cdot \Delta t$ der Zeitpunkt des letzten Nulldurchgangs gespeichert werden muß. Bei dynamischen Vorgängen ist dann jeweils bis zur Messung der nächsten Amplitude oder des nächsten Nulldurchgangs, z. B. also für 10 ms, eine Korrektur nicht mehr möglich. Diese sogenannte Totzeit $T_T$ ruft eine Diskontinuietät hervor, die bei einphasigen Größen grundsätzlich unvermeidbar ist.

Bei mehrphasigen Größen lassen sich beide Verfahren selbst dann nur in beschränktem Maße verbessern, wenn man die Amplituden $\hat{a}_m$ oder die Nulldurchgänge aller Leiter m heranzieht, um den Phasenwinkel $\varphi$ zu bestimmen. Die unvermiedliche Totzeit $T_T$ beträgt bei Drehstrom dann immer noch 3,33 ms.

Jede Totzeit verzögert aber den Meßvorgang und behindert die Wirksamkeit von Glättungseinrichtungen, die bei den meisten Anwendungsfällen erforderlich werden, um den spektralen Einfluß der Einschwingvorgänge und Oberschwingungen auszuschließen.

In der nichtvorveröffentlichten europäischen Patentanmeldung EP-A-150370, einem gemäß Artikel 54(3) EPÜ zu berücksichtigenden Dokument, ist ein Verfahren zum schnellen Ermitteln einer netzsynchronen Referenzspannung für einen netzgeführten Stromrichter nach einer Netzstörung vorgeschlagen, bei dem im ungestörten Zustand mehrere Sternspannungen des Netzes gleichzeitig erfaßt und in zwei reelle Komponenten überführt werden, die als Orthogonalkomponenten eines rotierenden Spannungsvektors aufgefaßt und mittels eines Vektordrehers in ein Bezugssystem transformiert werden, das gegenüber einer raumfesten Bezugsphase durch einen periodisch veränderlichen Drehwinkel festgelegt ist. Nach Ausfiltern von Oberschwingungen bestimmen die transformierten und gefilterten Orthogonalkomponenten einen Vektor, der mittels eines weiteren Vektordrehers in das raumfeste Bezugssystem rücktransformiert wird.

Bei diesem bekannten Verfahren wird der für die Transformation benötigte, periodisch veränderliche Drehwinkel dadurch gebildet, daß der Winkel zwischen dem durch die geglätteten transformierten Orthogonalkomponenten festgelegten Vektor und einer Bezugsachse im rotierenden Bezugssystem festgestellt und die Frequenz des Drehwinkels entsprechend dem Ausgangssignal dieser Winkelregelung verändert wird. Z. B. kann eine der transformierten, geglätteten Orthogonalkomponenten auf den Wert Null geregelt werden, so daß der entsprechende Vektor in die Richtung der der anderen Komponenten zugeordneten rotierenden Koordinatenachse zeigt. Im abgeglichenen Zustand ist also die Richtung des aus den transformierten Komponenten unter Ausfiltern von Oberschwingungen gegebenen und mittels des Drehwinkels ins raumfeste Bezugssystem rücktransformierten Vektors gleich der Richtung einer der rotierenden Koordinatenachsen und kann als Maß für die Phasenlage des Meßwertsystems abgegriffen werden.

Die bei diesem früheren Verfahren der Filterung unterworfenen Größen sind zwar im wesentlichen nur noch Gleichgrößen, so daß das Filter entsprechend schmalbandig ausgelegt werden kann, jedoch bedingt die verwendete Winkelregelung zur Nachführung des Drehwinkels einen apparativen Aufwand und Regelzeiten, die eine Erfassung der Phasenlage bei dynamischen Vorgängen verfälschen können.

Der Erfindung liegt die Aufgabe zugrunde, einen anderen Weg zur Erfassung der Phasenlage anzugeben, der mit möglichst geringem Aufwand und ohne Tot- und Ausregelzeiten auskommt. Diese Aufgabe wird gelöst durch ein Verfahren mit den im Anspruch 1 angegebenen Merkmalen.

Die Erfindung geht dabei davon aus, daß der für die Transformation der Meßgrößen ins rotierende Bezugssystem benötigte Drehwinkel nicht notwendigerweise phasenstarr mit dem durch die Transformation und Glättung der Komponenten bestimmten Winkel veränderlich sein muß. Wird für die Frequenz des Drehwinkels nämlich z. B. die Nennfrequenz des Netzes vorgegeben, so schwankt die aktuelle Netzfrequenz zwar um diese fest vorgegebene Nennfrequenz und im mit der Nennfrequenz rotierenden Bezugssystem ändert sich der durch die Transformation und Glättung bestimmte Winkel des Meßwertsystems mit einer diesen Schwankungen entsprechenden Differenzfrequenz ; deren Integral führt somit zu einer sich ständig ändernden Phasenbeziehung zwischen dem durch Transformation und Glättung erzeugten Winkel und dem Drehwinkel der rotierenden Bezugsachse. Da aber für die Transformation und die anschließende Rücktransformation jeweils der gleiche Drehwinkel benutzt wird, ist der Einfluß dieser Differenzfrequenz eliminiert. Die vorgeschlagene Winkelregelung ist also nicht erforderlich.

Darüber hinaus kann sogar auf eine Transformation in ein rotierendes Bezugssystem ganz verzichtet werden. Dies entspricht einem Drehwinkel, für den die Frequenz Null vorgegeben wird. Am Eingang der zum Ausfiltern der Oberschwingungen verwendeten Filter liegen dann Wechselgrößen an, die mit der Frequenz des Netzes veränderlich sind. Für eine digitale Durchführung des Verfahrens liegen aber rekursive oder nichtrekursive Filtermethoden vor, die in vielen Fällen eine dynamisch hinreichend genaue Ausfilterung dierer Oberschwingungen gestatten.

Gemäß der Erfindung werden also aus dem gemessenen Momentanwerten für die zeitveränderlichen Leitergrößen $g_R$, $g_S$, $g_T$ zunächst zwei reelle Komponenten gebildet, die den drehenden Raumzeiger des Meßwertsystems beschreiben. Nach DIN 13 321 werden hierzu die sogenannten Orthogonalkomponenten $g_\alpha$ und $g_\beta$ bestimmt nach

$$g_\alpha = \frac{1}{\sqrt{6}} (2\,g_R - g_S - g_T)\,, \tag{1}$$

$$g_\beta = \frac{1}{\sqrt{2}} (g_S - g_T)\,, \tag{2}$$

die den sogenannten positiv-sequenten drehenden Raumzeiger $\underset{\rightarrow}{g_p}$ in einer komplexen Zeigerebene festlegen, dessen Realteil mit einer vorgegebenen, raumfesten Bezugsachse zusammenfällt und mit dem drehenden Raumzeiger (Raumzeiger-Amplitude $\hat{g}$) den Winkel $\varphi_p$ einschließt, wobei gilt :

$$\underset{\rightarrow}{g_p} = \frac{1}{\sqrt{2}} (g_\alpha + jg_\beta) = \hat{g}\,e^{j\varphi_p}\,, \tag{3}$$

$$\varphi_p = \underset{\text{Hauptwert}}{\arctan} \frac{g_\beta}{g_\alpha} + \frac{\pi}{2} (1 - \mathrm{sign}\,g_\alpha)\,. \tag{4}$$

Definiert man durch eine Transformationsfrequenz $\omega_t$ einen mit der Integrationskonstanten $\xi_0$ behafteten Transformationswinkel

$$\xi_t = \int \omega_t \, dt = \omega_t \cdot t + \xi_0\,, \tag{5}$$

so kann man auf eine Darstellung in einer komplexen Zeigerebene übergehen, deren reelle Achse gegenüber der reellen Achse der ruhenden Zeigerebene rotiert. Dabei geht der Raumzeiger $g_p$ mit seinen Orthogonalkomponenten $g_\alpha$ und $g_\beta$ über in den transformierten Raumzeiger $\underset{\rightarrow}{g_s}$ mit den entsprechenden transformierten Komponenten $g_d'$, $g_q$ und dem transformierten Richtungswinkel $\varphi_s$ gemäß

$$\underset{\rightarrow}{g_s} = e^{-j\xi_t} \cdot \underset{\rightarrow}{g_p} = \hat{g}\,e^{j(\varphi_p - \xi_t)} = \hat{g}\,e^{j\varphi_s}\,, \tag{6}$$

$$\underset{\rightarrow}{g_s} = \frac{1}{\sqrt{2}} (g_d + jg_q)\,, \tag{7}$$

$$\varphi_s = \varphi_p - \xi_t\,. \tag{8}$$

3

Liegt nun ein stationärer Zustand vor, bei dem die Meßwerte, $g_R$, $g_S$ und $g_T$ um 120° elektrisch gegeneinander versetzt sind (« symmetrisches System ») und die Transformationsfrequenz exakt mit der Frequenz der Meßwerte übereinstimmt, so ist $g_s$ ein in der rotierenden Zeigerebene vollkommen ruhenden Zeiger. Wie die entsprechende Rücktransformation.

$$\vec{g}_p = e^{j\xi} \vec{g}_s = \hat{g}\, e^{j(\xi + \varphi_s)} = \hat{g}\, e^{j\varphi_p}\,; \tag{9a}$$

$$\left.\begin{array}{r} \varphi_s = \text{const} \\ \hat{g} = \text{const} \end{array}\right\} \Rightarrow \vec{g}_p = \text{const.}\, e^{j(\omega_0 t + \text{const})} \tag{9b}$$

beweist, beschreibt der drehende Raumzeiger $g_p$ in der ruhenden Zeigerebene einen gleichsinnig mit der Transformationsfrequenz rotierenden Kreis. Er wird daher als positiv sequente Komponente oder kurz als « Mitkomponente » des Meßwertsystems bezeichnet.

Ist aber die Gleichheit der Amplituden und Phasenverschiebungen zwischen den einzelnen Meßwerten durch eine Unsymmetrie gestört, so kann diese Störung als Überlagerung einer Gegenkomponente aufgefaßt werden, die sich durch einen gegenläufig zur Transformationsfrequenz rotierenden Zeiger darstellen läßt. Der durch (1) bis (4) definierte drehende Raumzeiger ist also eine additive Überlagerung beider Zeiger ; ordnet man den Außenleitern R, S, T die Maßzahlen m = 1, m = 2 und m = 3 zu, so kann theoretisch abgeleitet werden, daß die entsprechende Meßgröße $g_m$ in diesem Außenleiter durch Null geht, wenn — bis auf einen konstanten Summanden — der Zeigerwinkel $\varphi_p$ die Werte $(3k + m - 1) \cdot 2\pi/3 \mp \pi/2$ erreicht, wobei k = 0, 1, 2... eine ganzzahlig mit der Zeit fortschreitende Zahl ist.

Die durch die Beziehungen (5-8) gegebene Transformation des gesamten, aus Mitkomponente und Gegenkomponente zusammengesetzten Systems liefert nur einen Raumzeiger $g_s$ mit Komponenten $g_d$ und $g_q$ nach (7), die nicht mehr konstant sind. Die z. B. über einen oder mehrere Perioden gemittelten Komponenten $\bar{g}_d$, $\bar{g}_d$ beschreiben jedoch einen geglätteten Raumzeiger mit der Amplitude $\hat{g}$ und dem Winkel $\bar{\varphi}_s$ gemäß

$$\bar{\varphi}_s = \underset{\text{Hauptwert}}{\text{arc tan}}\ \frac{\bar{g}_q}{\bar{g}_d} + \frac{\pi}{2}\,(1 - \text{sign}\,\bar{g}_d), \tag{10}$$

$$\hat{\bar{g}}_s = \frac{1}{\sqrt{2}} \sqrt{\bar{g}_q^2 + \bar{g}_d^2}\,, \tag{11}$$

dessen Rücktransformation in die ruhende Zahlenebene nunmehr den Raumzeiger

$$\vec{\bar{g}}_p = \hat{\bar{g}}_s\, e^{j(\xi + \bar{\varphi}_s)} = \hat{\bar{g}}_s\, e^{j\bar{\varphi}_p} = \text{const}\, e^{j(\omega_t t + \text{const})} \tag{12}$$

liefert, der nunmehr mit (9b) vergleichbar ist und die im allgemeinen Ausdruck (3) enthaltene Mitkomponente angibt.

Für die exakte Bildung der Mitkomponente ist exakter Synchronismus zwischen der Meßwertfrequenz und der Transformationsfrequenz vorausgesetzt. Beim Einsetzen von (8) in (9a) oder (12) zeigt sich, daß bei geringen Abweichungen der Transformationsfrequenz $\omega_t = \xi$ von der Netzfrequenz sich lediglich der Winkel $\varphi_s$ beständig verändert, d. h. in der rotierenden Zeigerebene beginnt der Raumzeiger mit der Differenzfrequenz langsam zu rotieren. Die Amplitude des Raumzeigers spielt hierbei überhaupt keine Rolle und braucht ebenso wenig ermittelt zu werden, wie durch eine Winkelregelung ein strenger Synchronismus zwischen Netzfrequenz und Transformationsfrequenz hergestellt werden muß.

Der positiv-sequente Raumzeiger $g_p$ ist auch im nichtstationären Zustand die für das Drehfeld charakteristische Größe und damit für die elektromechanische Leistungsübertragung maßgebend. Oberschwingungen von $\varphi_p$ werden allein durch elektromagnetische Verzerrungen oder Unsymmetrien verursacht, die zur Leistungsübertragung wenig beitragen.

Die Transformationsfrequenz kann also ungeregelt vorgegeben werden, insbesondere kann die Nennfrequenz (d. h. die für den Betrieb vorgesehene mittlere Betriebsfrequenz des Netzes) oder ein ähnlicher, auf die mittlere Betriebsfrequenz des Wechselstromnetzes abgestimmter konstanter Wert vorgegeben werden. Ein im Netz vorhandenes Gegensystem wird in der raumfesten Zahlenebene, wie bereits erläutert wurde, durch einen entgegengesetzt rotierenden Zeiger und daher in der rotierenden Zahlenebene durch einen ungefähr mit doppelter Transformationsfrequenz rotierenden Zeiger beschrieben. Soll daher als charakteristische Größe für das Meßwertsystem nur die Mitkomponente ermittelt werden, so kann dies leicht durch Tiefpaßfilter oder andere selektive Filter bewirkt werden, denen die den quasi-stehenden Raumzeiger beschreibenden Komponenten $g_d$ und $g_q$ zugeführt werden und die durch Ausfiltern der doppelten Transformationsfrequenz sowie anderer, durch Netzverzerrungen und Unsymmetrien bedingter Oberfrequenzen die Mittelwerte $\bar{g}_q$, $\bar{g}_d$ bilden.

Das erfindungsgemäße Verfahren kann nun leicht digitalisiert werden. Dazu werden gleichzeitig für die drei Phasengrößen entsprechende digitale Meßwerte gebildet, wobei im Falle einer nullkomponentenfreien Leitung auch zwei Messungen genügen, da der dritte Meßwert durch die entsprechende Bedingung $(g_R + g_S + g_T) = 0$ festgelegt ist. Die Gleichungen (1) und (2) beschreiben die Arbeitsweise eines RST/$\alpha\beta$-Wandlers, dem eine nach (6) arbeitende Transformationseinrichtung zur Bildung der reellen Komponenten $g_d$ und $g_q$ nachgeschaltet werden kann. Unter Berücksichtigung des Transformationswinkels $\xi_t$ wird dann gemäß (8) der Winkel $\varphi_p$ als Maß für die Phasenlage des Meßwertsystems gebildet.

In vielen Fällen kann mit ausreichenden Genauigkeit auf die Transformation (6) und die Rücktransformation (9a) verzichtet werden. Die Meßwerte $g_R$, $g_S$, $g_T$ werden also in reelle Komponenten überführt, die den drehenden Raumzeiger lediglich in einem mit der Frequenz Null gegenüber der raumfesten Bezugsphase gedrehten Koordinatensystem beschreiben. Wenn Filter benötigt werden, so können digitale Filter verwendet werden, deren Rechenalgorithmus auf eine Durchlässigkeit bei der mittleren Betriebsfrequenz abgestimmt ist. Die Bandbreite der verwendeten Filter ist in jedem Fall vorteilhaft so zu dimensionieren, daß die im normalen Betrieb auftretenden Abweichungen der Betriebsfrequenz von der mittleren Betriebsfrequenz (Nennfrequenz) noch durchgelassen werden. Für hohe dynamische Filteranforderungen kann es auch vorgesehen sein, die Betriebsdaten des Filters so zu verändern, daß deren Resonanzfrequenz betriebsmäßig an die Frequenz der ermittelten Winkelgröße angepaßt werden kann.

Eine vorteilhafte Anwendung, eine bevorzugte Vorrichtung sowie weitere Ausbildungen der Erfindung sind in den Unteransprüchen gekennzeichnet. Anhand von 3 Figuren wird die Erfindung näher erläutert.

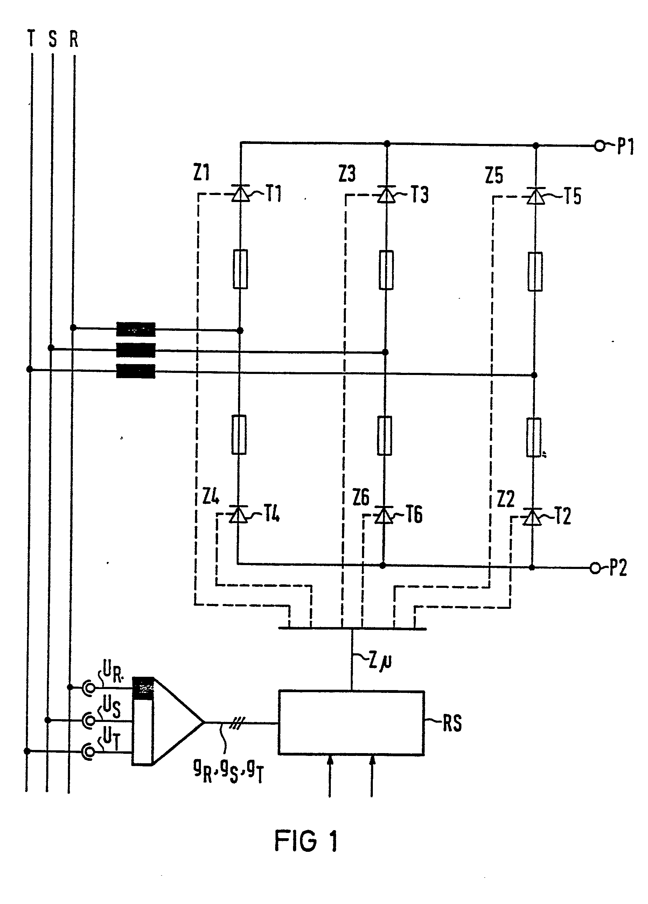

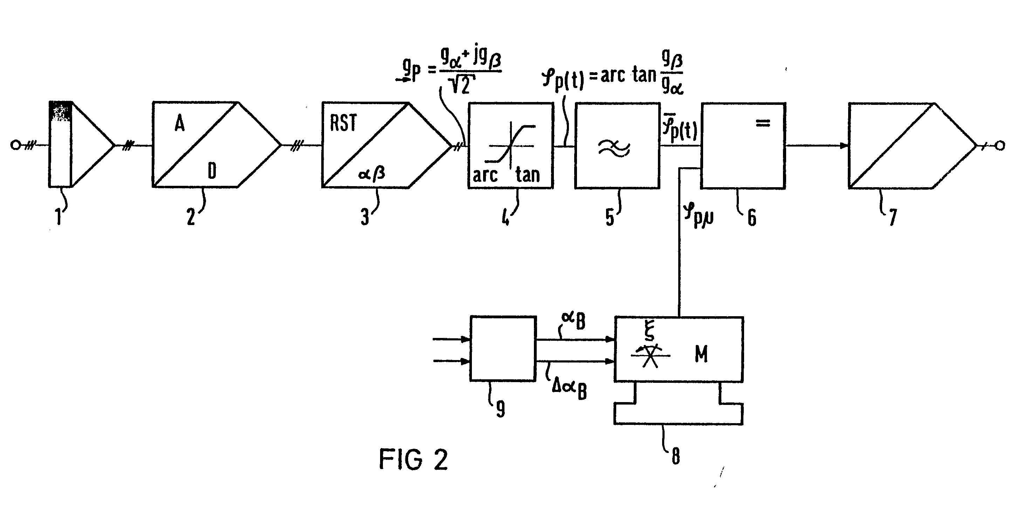

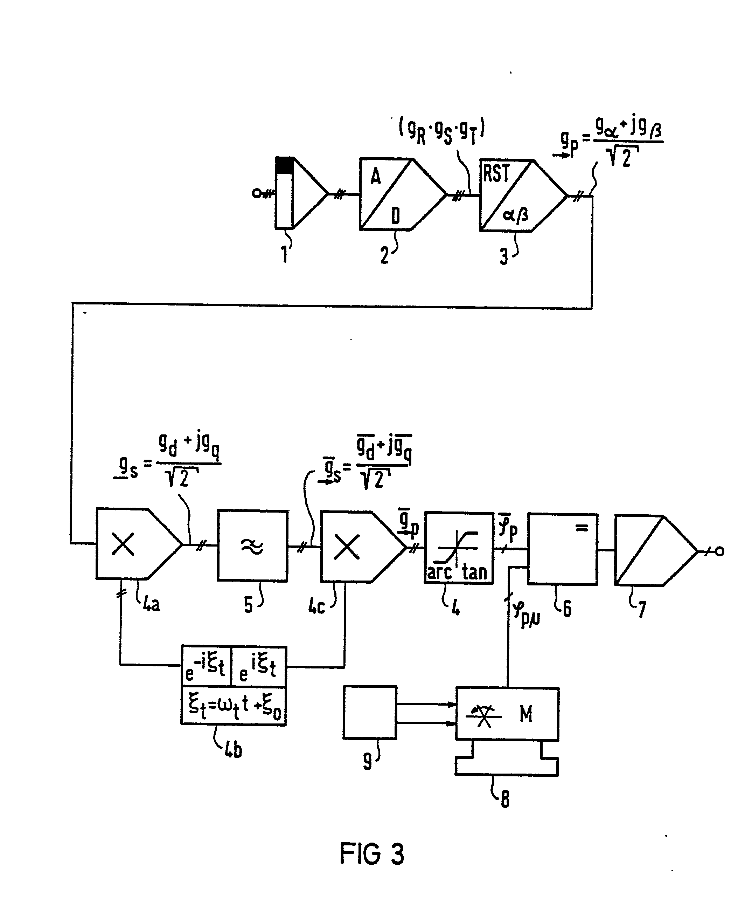

Figur 1 zeigt die bevorzugte Anwendung einer erfindungsgemäßen Vorrichtung bei einem Steuersatz eines an das Netz angeschlossenen Stromrichters. Figur 2 und Figur 3 zeigen je eine Ausführungsform, bei der die Frequenz des für die Transformation vorgegebenen Drehwinkels Null bzw. eine konstante Frequenz ist.

Die Erfindung ist an sich nicht auf ein Drehstromnetz mit einer bestimmten Anzahl von Leitern beschränkt, sie ist in Figur 1 jedoch für die drei Leiter R, S, T eines Drehstromnetzes dargestellt, die jeweils über Induktivitäten und ein Stromrichterventilpaar (T1, T4 bzw. T3, T6 bzw. T5, T2) an die beiden Klemmen P1, P2 einer Gleichstromleitung angeschlossen sind. Es kann sich hierbei beispielsweise um den Zwischenkreis eines Zwischenkreisumrichters, den Speisekreis eines Gleichstromverbrauchers oder die Übertragungsstrecke einer Hochspannungsgleichstromübertragung handeln.

Die Zündimpulse $Z_\mu$ für die Ventile $T_\mu$ ($\mu = 1, \dots 6$) müssen beim netzgetakteten Betrieb des Stromrichters auf die Phasenlage der einzelnen Spannungen $U_R$, $U_S$, $U_T$ synchronisiert werden, die in diesem Falle die Meßgrößen $g_R$, $g_S$, $g_T$ des Meßwertsystems darstellen. Aus diesen Meßwerten sowie weiteren Ist- und Sollwerten bildet ein regelnder und steuernder Prozessor RS die Zündimpulse $Z_\mu$ des Stromrichters.

Durch Abtastung der Meßwerte $g_R$, $g_S$, $g_T$ in einer Meßeinrichtung 1 und anschließende Umwandlung in einem Analog/Digital-Wandler 2 werden zunächst digitale Meßwerte gebildet, wobei durch bestimmte Abtastalgorithmen bereits ein erstes Ausfiltern von störenden Oberschwingungen vorgenommen sein kann (Fig. 2). Ein RST/$\alpha\beta$-Wandler 3 dient als Transformationseinrichtung, um aus den digitalen meßwerten die Komponenten $g_\alpha$, $g_\beta$ zu bilden, die als reelle, digitale Hilfsgrößen den drehenden Raumzeiger festlegen. Dies entspricht einer Festlegung des Raumzeigers in einer komplexen Zahlenebene, deren reelle Achse gegenüber einer raumfesten Bezugsachse um einen vorgegebenen, mit der Frequenz Null veränderlichen Drehwinkel gedreht ist. Die beiden Hilfsgrößen steuern einen Festwertspeicher an, der als digitaler arc-tan-Funktionsgeber den durch die Hilfsgrößen bestimmten Winkel des Raumzeigers in dieser Zahlenebene bildet. Da bei diesem Ausführungsbeispiel Oberschwingungen und die Gegenkomponente ausgefiltert werden sollen, können dem Funktionsgeber Glättungsmittel vor- oder nachgeschaltet werden, die in diesem Fall aus einem rekursiven oder nicht-rekursiven Filter 5 bestehen. Als ausschlaggebendes Maß für die Phasenlage des Netzes bei der Steuerung des Stromrichters nach Fig. 1 wird somit der geglättete, auf die raumfeste Bezugsachse bezogene Winkel $\bar{\varphi}_p$ ausgegeben.

Der Zündimpuls $Z_\mu$ für das Ventil $T_\mu$ wird durch Vergleich dieses Phasensignals $\bar{\varphi}_p$ mit entsprechenden Zündwinkeln $\varphi_{p\mu}$ in einem Vergleicher 6 gebildet, der jeweils bei Phasengleichheit einen entsprechenden Impuls an einen Steuerimpulsgeber 7 abgibt, der die Steuerimpulse verstärkt und den einzelnen Ventilen zuordnet. Die Zündwinkel $\varphi_{p\mu}$ sind als Zündraster aus einem entsprechenden Speicher 8 ausgelesen.

Bei der Steuerung der in Fig. 1 gezeigten Stromrichterbrücke erweist es sich als vorteilhaft, daß sich die Zündwinkel $\varphi_{p\mu}$ für das jeweilige Ventil $T_\mu$ in die komplexe Ebene des drehenden Raumzeigers eintragen lassen. Soll z. B. jedes Ventil bei einer festen Phasenlage bezogen auf seinen natürlichen Zündzeitpunkt gezündet werden, so genügt es, diese Phasenlage $\alpha_B$ in jedem beliebigen Zeitpunkt für ein beliebiges Ventil zu bestimmen. Der Winkel $\alpha_B$ kann dabei von einem steuernden oder regelnden Rechenteil 9 aus vorgegebenen Ist- und Sollwerten nach einem festen Programm ermittelt werden. Insbesondere kann durch $\alpha_B$ ein fester Betriebszustand vorgegeben werden, z. B. ein Leerlauf, bei dem das Netz nicht von einem durch den Stromrichter fließenden Strom belastet wird. Im Bedarfsfall kann dann durch einen Korrekturwinkel $\Delta\alpha_B$ die Differenz zwischen dem Richtungswinkel $\bar{\varphi}_p$ im belasteten Zustand und im Leerlauf ausgeglichen werden, d. h. die Zündwinkel werden entsprechend dem jeweiligen Belastungszustand korrigiert. Dies kann vor allem bei Drehstromnetzen mit geringer Kurzschlußleistung ratsam sein. Mittels eines stromabhängigen Korrekturwinkels $\Delta\alpha_B$ ist aber auch eine Schonwinkelsteuerung nahe der Stromrichter-Kippgrenze möglich. So gelingt es erfindungsgemäß, den richtigen Zündzeitpunkt für jedes Ventil $T_\mu$ allein aus dem Raumzeiger-Richtungswinkel $\bar{\varphi}_p$ der Spannung momentan ohne Verzögerung zu bestimmen, und dabei auch die möglichen Verzerrungen des Drehfeldes durch Unsymmetrien und Oberschwingungen zu berücksichtigen. Eine Berechnung und Berücksichtigung der Stromamplitude ist bei der Bildung des Richtungswinkels $\bar{\varphi}_p$ nicht erforderlich.

Bei der Vorrichtung nach Fig. 3 ist das Filter 5 dem arc tan-Funktionsgeber vorgeschaltet. Es ist als selektives Filter, insbesondere als Tiefpaßfilter ausgebildet, das nur Gleichgrößen durchläßt, die in ihrer Amplitude wenig veränderlich sind. Zu diesem Zweck müssen die mit Netzfrequenz veränderlichen digitalen Meßwerte nicht nur in die Komponenten $g_\alpha$, $g_\beta$, sondern in zwei reelle digitale Hilfsgrößen umgewandelt werden, die als Eingangsgrößen für das Filter 5 geeignet sind. Daher ist eine Transformationseinrichtung vorgesehen, die nicht nur den RST/$\alpha\beta$-Wandler 3, sondern auch noch eine nachgeordnete Transformationsstufe 4a enthält, und den drehenden Raumzeiger durch Frequenztransformation in den quasi-ruhenden, durch $g_d$ und $g_q$ beschriebenen Raumzeiger $g_s$ überführt. Die Koeffizienten, mittels derer die digitalen Meßwerte $g_R'$, $g_S$, $g_T$ und die Komponenten $g_d$ und $g_q$ verknüpft sind, sind also nicht mehr konstant, sondern mit einer konstanten Frequenz zeitveränderliche Faktoren. Sie sind als sin oder cos eines mit der vorgegebenen Frequenz $\omega_t$ veränderlichen Transformationswinkels $\xi_t$ gegeben und führen somit die Transformation (6), (7) durch. Diese Faktoren werden erzeugt von einem z. B. mit der Nennfrequenz betriebenen Oszillator 4b. Dieselben Faktoren können, lediglich mit anderen Vorzeichen bewertet, auch zur Durchführung der inversen Transformation gemäß Gleichung (9a) verwendet werden, um nunmehr den bezüglich der rotierenden Zahlenebene ermittelten, geglätteten Raumzeiger $\bar{g}_s$ in den entsprechenden geglätteten Raumzeiger $\bar{g}_p$ in der ruhenden Zahlenebene zu bilden. Es kann aber auch vorgesehen sein, den Funktionsgeber 4 direkt von den Komponenten des geglätteten Raumzeigers $\bar{g}_s$ anzusteuern und anschließend in die raumfeste Zahlenebene zu transformieren, wobei diese Transformation lediglich gemäß (8) aus der Winkeladdition $\bar{\varphi}_s + \xi_t = \bar{\varphi}_p$ besteht.

## Patentansprüche

1. Digitales Verfahren zum Bestimmen der Phasenlage eines Meßwertsystems für Strom oder Spannung eines mehrphasigen Wechselstromnetzes, wobei digitale Meßwerte ($g_R$, $g_S$, $g_T$) an mehreren Systempunkten des Netzes gleichzeitig gebildet und in zwei reelle Komponenten ($g_\alpha$, $g_\beta$; $g_d$, $g_q$) überführt werden, die den drehenden Raumzeiger ($g_p'$, $g_s$) des Meßwertsystems in einem durch einen Drehwinkel ($\xi_t$) gegenüber einer raumfesten Bezugsphase festgelegten Zahlenebene beschreiben, und bei dem als Maß für die Phasenlage der Winkel des Raumzeigers unter Berücksichtigung des Drehwinkels und ggf. unter Ausfiltern von Oberschwingungen gebildet wird, wobei die Frequenz ($\omega_t$) des Drehwinkels Null oder ein auf die mittlere Betriebsfrequenz des Wechselstromnetzes abgestimmter, gesteuerter Wert ist.

2. Verfahren nach Anspruch 1, wobei als Frequenz des Drehwinkels die mittlere Betriebsfrequenz des Netzes vorgegeben wird und daß für das Ausfiltern eine durch die Abweichung der Betriebsfrequenz von der mittleren Betriebsfrequenz bestimmte Bandbreite vorgegeben wird.

3. Verfahren nach Anspruch 1 oder 2, wobei die Meßwerte zunächst in zwei den drehenden Raumzeiger bezüglich der raumfesten Bezugsphase beschreibende Hilfsgrößen ($g_\alpha$, $g_\beta$) überführt werden, anschließend diese Hilfsgrößen in eine mit der auf die mittlere Betriebsfrequenz abgestimmten Frequenz rotierende Zahlenebene transformiert und geglättet werden, und daß als Phasenlage ein aus dem momentanen Drehwinkel ($\xi_t$) zwischen der raumfesten Bezugsphase und der rotierenden Zahlenebene und aus den transformierten geglätteten Hilfsgrößen ($\bar{g}_d$, $\bar{g}_q$) gebildeter, der Summe aus dem momentanen Drehwinkel und dem durch die transformierten Hilfsgrößen beschriebenen Winkel des transformierten geglätteten Raumzeigers entsprechender Summenwinkel abgegriffen wird.

4. Verfahren nach Anspruch 3, wobei beim Ausfiltern der Oberschwingungen und Unsymmetrien die verwendeten Filterparameter betriebsmäßig vorgegeben werden.

5. Anwendung des Verfahrens nach einem der Ansprüche 1 bis 4, zum Synchronisieren des Steuersatzes eines an das Netz angeschlossenen Stromrichters, wobei die Zündzeitpunkte der Stromrichterventile durch Vergleich der Phasenlage des Meßwertsystems mit abgespeicherten Zündwinkeln bestimmt werden.

6. Anwendung nach Anspruch 5, wobei die Phasenlage des Spannungsraumzeigers gebildet und mit entsprechend dem Leerlauf und entsprechend einem anderen Bezugszustand des Stromrichters vorgegebenen Zündwinkeln und einem stromabhängig bestimmten Korrektur-Zündwinkel verglichen wird.

7. Digitale Vorrichtung zum Bestimmen der Phasenlage eines dreiphasigen Meßwertsystems für Strom oder Spannung eines Drehstromnetzes, mit

a) einer Meßeinrichtung (1, 2), die durch gleichzeitige Messung an zwei oder drei Systempunkten des Drehstromnetzes Meßwerte liefert,

b) einer Transformationseinrichtung 3; 3 + 4a), die aus den Meßwerten zwei reelle digitale Hilfsgrößen bildet, die den den Meßwert beschreibenden rotierenden Raumzeiger in einem gegenüber einer raumfesten Bezugsachse des Drehstromnetzes um einen vorgegebenen Drehwinkel gedrehten Zahlenebene festlegen,

c) einer Recheneinrichtung, die den durch die Hilfsgrößen bestimmten Winkel ($\bar{\varphi}_s$) des ggf. geglätteten (Filter 5) Raumzeigers in dem gedrehten Bezugssystem bildet und den in dem Drehwinkel korrigierten Winkel des ggf. geglätteten Raumzeigers als Meßsignal ($\bar{\varphi}_p$) für die Phasenlage des Meßwertsystems bildet, wobei die Meßeinrichtung (1, 2) digitale Meßsignale liefert und daß die Transformationseinrichtung eine Rechenstufe ist, die die Meßwerte über Koeffizienten miteinander verknüpft, die konstant oder mit einer konstant vorgegebenen Frequenz zeitveränderlich sind und den Raumzeiger in einen gegenüber dem Drehstromnetz ruhenden oder mit der konstanten Frequenz rotierenden Bezugssystem festlegen.

8. Vorrichtung nach Anspruch 7, wobei als Transformationsstufe ein RST/$\alpha\beta$-Wandler zur Bildung der den drehenden Raumzeiger bezüglich der raumfesten Bezugsachse beschreibenden Orthogonalkomponenten ($g_\alpha$, $g_\beta$) und als Recheneinrichtung ein arc tan-Funktionsgeber (4) für den Quotienten der Orthogonalkomponenten verwendet ist. (Fig. 2)

9. Vorrichtung nach Anspruch 7, wobei die Rechenstufe aus einem RST/$\alpha\beta$-Wandler zur Bilding der den drehenden Raumzeiger bezüglich einer raumfesten Bezugsachse beschreibenden Orthogonalkomponenten ($g_\alpha$, $g_\beta$) und einer nachgeordneten Transformationsstufe (4a) zur Transformation der Orthogonalkomponenten in die entsprechenden, in einer mit der vorgegebenen Frequenz rotierenden Zahlenebene transformierten Komponenten ($g_d$, $g_q$) besteht, daß die Recheneinrichtung ein Glättungsglied (5) für die transformierten Orthogonalkomponenten, eine nachgeordnete weitere Transformationsstufe (4c) zur Rücktransformation ins raumfeste Bezugssystem und einen arc tan-Funktionsgeber (4) enthält.

10. Steuersatz für einen an das Drehstromnetz angeschlossenen Stromrichter mit einer Vorrichtung nach einem der Ansprüche 7-9, wobei die derart bestimmte Phasenlage des Meßwertsystems unabhängig von der Momentanamplitude des Meßwertsystems dem einen Eingang eines digitalen Vergleichers (6) eingegeben werden, daß von einer Steuer- oder Regeleinrichtung (9) den Zündwinkeln für die Ventile des Stromrichters entsprechende Werte ($\varphi_{p\mu}$) in den Speicher eingeladen werden, dessen Ausgang mit dem anderen Eingang des Vergleichers verbunden ist, und daß am Ausgang des Vergleichers Steuerimpulse für die Bildung der Zündimpulse abgegriffen sind.

11. Steuersatz nach Anspruch 10, wobei in der Meßeinrichtung die Phasenspannungen des Drehstromnetzes gemessen und in der Regel- oder Steuereinrichtung ein der drehstromseitigen Ausgangsspannung des Stromrichters im Leerlauf oder in einem anderen Bezugszustand entsprechender Zünd-Sollwinkel ($\alpha_B$) und ein aus den Phasenströmen ermittelter Korrektur-Zündwinkel ($\Delta\alpha_B$) zur Bestimmung des Zündwinkels gebildet wird.

## Claims

1. Digital method for determining the phase relation of a measurement value system for current or voltage of a polyphase alternating current network, in which digital measurement values ($g_R$, $g_S$, $g_T$) are simultaneously formed at several system points of the network and are converted into two real components ($g_\alpha$, $g_\beta$; $g_d$, $g_q$) which describe the rotating space vector ($g_p$, $g_s$) of the measurement value system in a numerical plane which is determined by an angle of rotation ($\xi_t$) with respect to a spatially fixed reference phase, and in which the angle of the space vector is formed as the measurement for the phase relation, taking the angle of rotation into account and, if necessary, with harmonics filtered out, in which the frequency ($\omega_t$) of the angle of rotation is zero or is a controlled value synchronised with the mean operating frequency of the alternating current network.

2. Method according to claim 1, in which the mean operating frequency of the network is specified as the frequency of the angle of rotation and in which a band width is specified for the filtering out procedure which is determined by the deviation of the operating frequency from the mean operating frequency.

3. Method according to claim 1 or 2, in which the measurement values are first converted into two auxiliary quantities ($g_\alpha$, $g_\beta$) describing the rotating space vector with respect to the spatially fixed reference phase, then these auxiliary quantities are transformed into a numerical plane rotating with the frequency which is synchronised with the mean operating frequency and are smoothed, and in which a cumulative angle, formed from the instantaneous angle of rotation ($\xi_t$) between the spatially fixed reference phase and the rotating numerical plane and from the transformed, smoothed auxiliary quantities ($g_d$, $g_q$), and corresponding to the sum of the instantaneous angle of rotation and the angle of the transformed, smoothed space vector described by the transformed auxiliary quantities, is taken off as the phase relation.

4. Method according to claim 3, in which when the harmonics and asymmetries are filtered out, the filter parameters used are specified operatively.

5. Application of the method according to one of claim 1 to 4 to synchronise the control unit of a power converter connected to the network, in which the firing time points of the power converter valves are determined by comparison of the phase relation of the measurement value system with stored firing angles.

6. Application according to claim 5, in which the phase relation of the voltage space vector is formed and is compared with firing angles which are specified corresponding to the no-load operation and

7

corresponding to another reference status of the power converter and with a correction firing angle determined in dependence on the current.

7. Digital device for determining the phase relation of a three-phase measurement value system for current or voltage of a three-phase supply network, with

a) a measurement device (1, 2) which supplies measurement values by simultaneously taking measurements at two or three system points of the three-phase supply network,

b) a transformation device (3 ; 3 + 4a) which forms from the measurement values two real digital auxiliary quantities which define the rotating space vector describing the measurement value in a numerical plane rotated by a specified angle of rotation with respect to a spatially fixed reference axis of the three-phase supply network,

c) a computing device which forms the angle ($\bar{\varphi}_s$), determined by the auxiliary quantities, of the space vector, smoothed if necessary (filter 5), in the rotated reference system and forms the angle, corrected with the angle of rotation, of the space vector, smoothed if necessary, as a measurement signal ($\bar{\varphi}_p$) for the phase relation of the measurement value system, in which the measurement device (1, 2) produces digital measurement signals and in which the transformation device is a computing stage which combines the measurement values together via coefficients which are constant or which may be time-variable with a frequency which is prescribed constant and which plot the space vector in a reference system which is static with respect to the three-phase supply network or which rotates with the constant frequency.

8. Device according to claim 7, in which an RST/$\alpha\beta$-transformer is used as the transformation stage to form the orthogonal components ($g_\alpha$, $g_\beta$) describing the rotating space vector with respect to the spatially fixed reference axis and an arc tan function transmitter is used as the computing device for the quotients of the orthogonal components (Fig. 2).

9. Device according to claim 7, in which the computing stage consists of an RST/$\alpha\beta$-transformer for forming the orthogonal components ($g_\alpha$, $g_\beta$) describing the rotating space vector with respect to a spatially fixed reference axis and a transformation stage (4a), connected after it, for transforming the orthogonal components into the corresponding components ($g_d$, $g_q$) which have been transformed in a numerical plane rotating with the specified frequency, in which the computing device includes a smoothing element (5) for the transformed orthogonal components, a further transformation stage (4c) inserted after it for the inverse transformation into the spacially fixed reference system and an arc tan function transmitter (4).

10. Control unit for a power converter connected to the three-phase supply network with a device according to one of claims 7-9, in which the phase relation, determined in this manner, of the measurement value system are fed to one input of a digital comparator (6) independently of the instantaneous amplitude of the measurement value system, in which values ($\gamma_{p\mu}$) corresponding to the firing angles for the valves of the power converter are loaded by a control or regulating device (9) into the store, the output of which is connected to the other input of the comparator, and in which control pulses are taken off at the output of the comparator to form the firing pulses.

11. Control unit according to claim 10, in which the phase voltages of the three-phase supply system are measured in the measurement device and in the regulating or control device is formed a desired firing angle ($\alpha_B$) corresponding to the output voltage, on the three-phase supply side, of the power converter in no-load operation or in some other reference status and a correction firing angle ($\Delta\alpha_B$), obtained from the phase currents, to determine the firing angle.

## Revendications

1. Procédé numérique pour déterminer la position de phase d'un système de valeurs de mesure pour le courant ou la tension d'un réseau à courant alternatif polyphasé, selon lequel des valeurs numériques de mesure ($g_R$, $g_S$, $g_T$) sont formées simultanément en plusieurs points du système du réseau et sont transformées en deux composantes réelles ($g_\alpha$, $g_\beta$ ; $g_d$, $g_q$), qui décrivent le vecteur spatial rotatif ($g_p$, $g_s$) du système de valeurs de mesure dans un plan complexe déterminé par un angle de rotation ($\xi k$) par rapport à une phase de référence fixe dans l'espace, selon lequel on forme, en tant que mesure de la position de phase, l'angle du vecteur spatial en tenant compte de l'angle de rotation et éventuellement en éliminant par filtrage des oscillations harmoniques, et selon lequel la fréquence ($\omega_t$) de l'angle de rotation est nulle ou est une valeur commandée, accordée sur la fréquence moyenne de service du réseau à courant alternatif.

2. Procédé suivant la revendication 1, selon lequel, en tant que fréquence de l'angle de rotation, on prédétermine la fréquence moyenne de service du réseau et, pour l'élimination par filtrage, on prédétermine une largeur de bande déterminée par l'écart entre la fréquence de service et la fréquence moyenne de service.

3. Procédé suivant la revendication 1 ou 2, selon lequel on convertit tout d'abord les valeurs de mesure en deux grandeurs auxiliaires ($g_\alpha$, $g_\beta$) qui décrivent le vecteur spatial rotatif par rapport à la phase de référence fixe dans l'espace, transforme et lisse ensuite ces grandeurs auxiliaires dans un plan complexe tournant à la fréquence réglée sur la fréquence moyenne de service, et qu'on prélève, en tant que position de phase, l'angle somme formé à partir de l'angle de rotation instantané ($\xi_t$) entre la phase de référence fixe dans l'espace et le plan complexe rotatif et à partir des grandeurs auxiliaires lissées et transformées ($\bar{g}_d$, $\bar{g}_q$), et correspondant à la somme de l'angle de rotation instantané et de l'angle, décrit par les grandeurs auxiliaires transformées, du vecteur spatial transformé et lissé.

4. Procédé suivant la revendication 3, selon lequel, lors de l'élimination par filtrage des oscillations harmoniques et des dissymétries, on prédétermine la valeur des paramètres de filtage utilisés.

5. Application du procédé suivant les revendications 1 à 4 à la synchronisation de l'unité de déclenchement d'un convertisseur statique raccordé au réseau, dans laquelle on détermine les instants d'amorçage des valves du convertisseur statique par comparaison entre la position de phase du système de valeurs de mesure et des angles d'amorçage mémorisés.

6. Application suivant la revendication 5, dans laquelle on forme la position de phase du vecteur spatial de tension et on la compare à des angles d'amorçage, prédéterminés en fonction de la marche à vide et en fonction d'un autre état de référence du convertisseur statique, et à un angle d'amorçage de correction déterminé en fonction du courant.

7. Dispositif numérique pour déterminer la position de phase d'un système triphasé de valeurs de mesure pour le courant ou la tension d'un réseau triphasé, comportant :

a) un dispositif de mesure (1, 2), qui délivre des valeurs de mesure grâce à une mesure simultanée exécutée en deux ou trois points du système du réseau triphasé,

b) un dispositif de transformation (3 ; 3 + 4a), qui forme, à partir des valeurs de mesure, deux grandeurs auxiliaires numériques réelles, qui déterminent le vecteur spatial rotatif décrivant la valeur de mesure, dans un plan complexe décalé d'un angle de rotation prédéterminé par rapport à un axe de référence, fixe dans l'espace, du réseau triphasé,

c) un dispositif de calcul, qui forme l'angle ($\bar{\varphi}_s$), déterminé par les grandeurs auxiliaires, du vecteur spatial éventuellement lissé (filtre 5) dans le système de référence rotatif et forme l'angle, corrigé par l'angle de rotation, du vecteur spatial éventuellement lissé, en tant que signal de mesure ($\bar{\varphi}_p$) pour la position de phase du système de valeurs de mesure,

et dans lequel le dispositif de mesure (1, 2) délivre des signaux numériques de mesure, et le dispositif de transformation est un étage de calcul, qui combine entre elles les valeurs de mesure moyennant l'utilisation de coefficients, qui sont constants ou variables dans le temps avec une fréquence prédéterminée de façon constante et déterminent le vecteur spatial dans un système de référence, qui est au repos par rapport au réseau triphasé ou tourne avec une fréquence constante.

8. Dispositif suivant la revendication 7, dans lequel on utilise, comme étage de transformation, un convertisseur RST/$\alpha\beta$ servant à former les composantes orthogonales ($g_\alpha$, $g_\beta$) décrivant le vecteur spatial rotatif par rapport à l'axe de référence fixe dans l'espace, et on utilise comme dispositif de calcul un générateur (4) de la fonction arctg pour le quotient des composantes orthogonales (figure 2).

9. Dispositif suivant la revendication 7, dans lequel l'étage de calcul est constitué par un convertisseur RST/$\alpha\beta$ servant à former les composantes orthogonales ($g_\alpha$, $g_\beta$) décrivant le vecteur spatial rotatif par rapport à un axe de référence fixe dans l'espace, et par un étage de transformation (4a) branché en aval servant à transformer les composantes orthogonales en les composantes correspondantes ($g_d$, $g_q$) transformées dans un plan complexe tournant avec la fréquence prédéterminée, et dans lequel le dispositif de calcul comporte un circuit (5) de lissage pour les composantes orthogonales transformées, un autre étage de transformation (4c) branché en aval et servant à réaliser la transformation inverse dans le système de référence fixe dans l'espace, et un générateur (4) de la fonction arctg.

10. Unité de déclenchement pour un convertisseur statique raccordé au réseau triphasé et comportant un dispositif suivant l'une des revendications 7-9, dans laquelle à une entrée d'un comparateur numérique (6) est envoyée, indépendamment de l'amplitude instantanée du système de valeurs de mesure, la position de phase de ce système, déterminée de telle sorte qu'un dispositif de commande ou de réglage (9) introduit des valeurs ($\varphi_{pu}$), correspondant aux angles d'amorçage pour les valves du convertisseur statique, dans la mémoire, dont la sortie est reliée à l'autre entrée du comparateur, et que des impulsions de commande pour la formation des impulsions d'amorçage sont prélevées sur la sortie du comparateur.

11. Unité de déclenchement suivant la revendication 10, dans laquelle les tensions des phases du réseau triphasé sont mesurées dans le dispositif de mesure et un angle d'amorçage de consigne ($\alpha_B$), qui correspond à la tension de sortie côté triphasé du convertisseur statique dans le fonctionnement à vide ou dans un autre état de référence, et un angle d'amorçage de correction ($\Delta\alpha_B$), déterminé à partir des courants des phases et servant à déminer l'angle d'amorçage, sont formés dans le dispositif de régulation ou de commande.

9

EP 0 197 445 B1

FIG 1

$$\underline{g}_P = \frac{g_\alpha + jg_\beta}{\sqrt{2}}$$

$$\mathcal{G}_{p(t)} = \text{arc tan} \frac{g_\beta}{g_\alpha}$$

FIG 2

EP 0 197 445 B1

EP 0 197 445 B1

FIG 3